# EUROPEAN PATENT APPLICATION

(11) **EP 4 116 137 A1**
(43) Date of publication of application: **11.01.2023**
(21) Application number: 22178113.1
(22) Date of filing: 09.06.2022
(51) Int. Cl.: B60L 50/60, B60L 58/20

(54) **A UTILITY VEHICLE AND A METHOD OF USING THE UTILITY VEHICLE**

(30) Priority: 05.07.2021 NL 2028626
(71) Applicant: Abemec B.V., 5462 GG Veghel (NL)
(72) Inventor: LOEFFEN, Cornelis Woltherus Hendricus, VEGHEL (NL)
(74) Representative: Algemeen Octrooi- en Merkenbureau B.V.

(57) **Abstract**

A utility vehicle (1), such as a tractor, comprising:
- a coupling arrangement (3A, 3B) arranged for removably coupling a tool, such as an agricultural implement, to said utility vehicle (1);
- an electromotor (7) arranged for moving said utility vehicle (1) and/or powering said tool;
- a first electrical power unit (9), coupled to said electromotor (7), arranged for powering said electromotor (7);
- a second electrical power unit (11), removably coupled to said coupling arrangement (3A, 3B), arranged for powering said electromotor (7). A method (101) of using the utility vehicle (1).

## Description

According to a first aspect the present disclosure relates to a utility vehicle.

According to a second aspect the present disclosure relates to a method of using the utility vehicle.

A utility vehicle such as a tractor that may also be referred to as an engineering, agricultural or construction vehicle are widely used for carrying out a relative wide range of different tasks. Within the context of the present disclosure a tractor is to be understood as an engineering vehicle specifically designed to deliver a high tractive effort (or torque) at slow speeds, for the purposes of hauling a trailer or machinery such as that used in agriculture, mining or construction. Tools such as agricultural implements and civil implements may be towed behind or mounted on the tractor, and the tractor may also provide a source of power if the tool is mechanised. Examples of such civil implements are tools for roadside maintenance, anti-icing and snow removal, earth moving, watering of public spaces, sewer maintenance and sweeping of roads.

A known utility vehicle such as a tractor is provided with an internal combustion engine for providing the utility vehicle with a relative high power. In addition, an internal combustion engine is attractive for allowing the utility vehicle to operate during a relative long period before refilling a tank of the utility vehicle with fuel. A drawback of the know utility vehicle is that, during use, the utility vehicle exhaust gasses originating from the internal combustion engine that may prevent from using the utility vehicle in cases where emission of such exhaust gasses are not allowed.

The objective of the present disclosure is to provide a utility vehicle that may be used in cases where emission of exhaust gasses are restricted or even not permitted, while allowing the utility vehicle to operate for a relative long period at a relative high power output.

The objective is achieved by the utility vehicle according to the first aspect of the present disclosure, wherein the utility vehicle comprises:
- a coupling arrangement arranged for removably coupling a tool, such as an agricultural implement, to said utility vehicle;
- an electromotor arranged for moving said utility vehicle and/or powering said tool;
- a first electrical power unit, coupled to said electromotor, arranged for powering said electromotor;
- a second electrical power unit, removably coupled to said coupling arrangement, arranged for powering said electromotor.

By providing the first electrical power unit, the utility vehicle may be moved and/or a tool coupled to the utility vehicle may be powered by the electromotor. This is beneficial for allowing a user to operate the utility vehicle in cases where emission of exhaust gasses are restricted or even not permitted.

The present disclosure relies at least partly on the insight that for powering the utility vehicle for a relative long period a relative large first electrical power unit may be needed. A relative large first electrical power unit may, however, not be very attractive since a relative large first electrical power unit may contribute significantly to the weight of the utility vehicle, thereby potentially reducing the operational capacity of the utility vehicle. By providing the second electrical power unit, the first electrical power unit may be relatively small while allowing the utility vehicle to operate for a relative long period at a relative high power output. Since the second electrical power unit is removably coupled to the coupling arrangement, the second electrical power unit may be exchanged relatively quickly by a further second electrical power unit, thereby allowing a relative high up-time of the utility vehicle.

Preferably, said second electrical power unit is arranged for powering said electromotor together with said first electrical power unit. By arranging the second electrical power unit such that the electromotor is power by the second electrical power unit together with the first electrical power unit a relative high power output may be realised allowing the utility vehicle to be used for task requiring a relative high power output.

Preferably, said second electrical power unit is further removably coupled to said electromotor.

In an embodiment of the utility vehicle, said utility vehicle is free from an internal combustion engine. This is beneficial for realising a utility vehicle having a relative large first electrical power unit while allowing operation of the utility vehicle without emission of exhaust gasses. The present disclosure at least partly relies on the insight that an internal combustion engine may account for a relative large part of the weight of the utility vehicle. By omitting the internal combustion engine, space and a relative large weight budget is made available for the first electrical power unit.

Preferably, said utility vehicle comprises a gear box and wherein said electromotor is coupled to said gear box for moving said utility vehicle via said gear box. This is beneficial for providing the user an experience that is relatively comparable to a utility vehicle provided with an internal combustion engine. A further benefit of coupling the electromotor to the gear box is beneficial for allowing a relative practical conversion of a known utility vehicle that is provided with an internal combustion engine to a utility vehicle according to the present disclosure.

It is advantageous, if said utility vehicle comprises a storage arrangement that is provided with a receiving space for at least partly housing said second electrical power unit, wherein said second electrical power unit is provided in said receiving space. This is beneficial for providing a relative safe utility vehicle, at least relatively safe for other persons and vehicles that may collide with the utility vehicle.

In this regard, it is beneficial if said storage arrangement is removably coupled to said coupling arrangement.

In an embodiment, the storage arrangement is arranged for absorbing an external shock or force thereby preventing, or at least reducing the risk of damaging the utility vehicle due to the external shock or force.

In an embodiment, the storage arrangement comprises a bumper or is formed by a bumper. Within the context of the present disclosure, a bumper is to be understood as a device that may be attached to rear, front or side of the utility vehicle. The bumper may be arranged for absorbing an external shock or force thereby preventing, or at least reducing the risk of damaging the utility vehicle due to the external shock or force.

Preferably, an electrical capacity of said second electrical power unit is larger than an electrical capacity of said first electrical power unit. This is beneficial for allowing the utility vehicle to operate for a relative long period at a relative high power output.

It is advantageous if said utility vehicle comprises a connector unit arranged for connecting said utility vehicle to an external power source for charging said first electrical power unit. This is beneficial for allowing said first electrical power unit to maintain connected to the utility vehicle during charging, thereby allowing the first electrical power unit to be integrated into the utility vehicle in a way that is comparable to an internal combustion engine.

Preferably, said utility vehicle comprises a control unit arranged for controlling an operational mode of said utility vehicle, wherein in a first operational mode of said utility vehicle said electromotor is powered solely by said first electrical power unit.

Preferably, said control unit is further arranged for bringing said utility vehicle in a second operational mode, wherein said electromotor is powered by said first electrical power unit and said second electrical power unit. This is beneficial for allowing the utility vehicle to operate for a relative long period at a relative high power output.

In this regard, it is advantageous if, in said first operational mode, said first electrical power unit solely powers said electromotor to a first power level and wherein, in said second operational mode, said first electrical power unit and said second electrical power unit power said electromotor to a second power level that is higher than said first power level. This is beneficial for allowing the utility vehicle to operate for a relative long period at a relative high power output.

Preferably, said control unit is further arranged for bringing said utility vehicle in a third operational mode, wherein said second electrical power unit solely powers said electromotor to a third power level that is higher than said first power level and lower than said second power level.

It is advantageous if said first electrical power unit is provided inside said utility vehicle.

Preferably, said utility vehicle comprises a bonnet, wherein said first electrical power unit is provided under said bonnet.

Preferably, said second electrical power unit is arranged as counterweight.

It is beneficial if said first electrical power unit and/or said second power unit are batteries.

In this regard, it is advantageous if said second electrical power unit is provided with wheels for supporting said second electrical power unit on a ground surface. This is beneficial for allowing use of a relative large second electrical power unit thereby allowing the utility vehicle to operate for a relative long period at a relative high power output.

Preferably, said second electrical power unit is arranged for being charged only when said second electrical power unit is decoupled from said coupling arrangement.

Preferably, said second electrical power unit comprises a charger arranged for charging said second electrical power unit and further arranged for being connected to an Alternating Current, AC, mains signal.

Preferably, said second electrical power unit comprises a fuel cell arranged for powering said electromotor. This is beneficial for realising a utility vehicle that may be operated for a relative long period at a relative high power output.

In this regard, it is beneficial if said second power unit comprises a hydrogen storage coupled for fluid flow to said fuel cell for providing hydrogen from said hydrogen storage to said fuel cell.

Preferably, said second power unit comprises a system for hydrogen production by dehydrogenation of formic acid arranged for supplying hydrogen to said hydrogen storage and/or said fuel cell.

According to the second aspect of the present disclosure, the present disclosure relates to a method of using the utility vehicle according to the first aspect of the present disclosure, said method comprising the steps of:
- decoupling, by said coupling arrangement, said second electrical power unit from said coupling arrangement;
- charging, by a charging station, after said decoupling, said second electrical power unit;
- coupling, by said coupling arrangement, said charged second electrical power unit to said coupling arrangement;
- moving said utility vehicle, by powering said electromotor, via said first power electrical unit and/or said second electrical power unit.

Embodiments of the method according to the second aspect correspond to embodiments of the utility vehicle according to the first aspect of the present disclosure. The advantages of the method according to the second aspect correspond to advantages of the utility vehicle according to first aspect of the present disclosure presented previously.

Embodiments of the utility vehicle and the method according to the present disclosure will next be explained by means of the accompanying schematic figures, wherein:
Fig. 1 shows a schematic overview of an embodiment of a utility vehicle according to the first aspect of the present disclosure;
Fig. 2 shows an exploded view of the utility vehicle of Fig. 1;
Fig. 3 shows a schematic overview of another embodiment of a utility vehicle according to the first aspect of the present disclosure;
Fig. 4 shows an exploded view of the utility vehicle of Fig. 3;
Fig. 5 shows a schematic overview of a third embodiment of a utility vehicle according to the first aspect of the present disclosure;
Fig. 6 shows a schematic overview of a fourth embodiment of a utility vehicle according to the first aspect of the present disclosure;
Fig. 7 shows an overview of a method of using a utility vehicle according to the second aspect of the present disclosure.

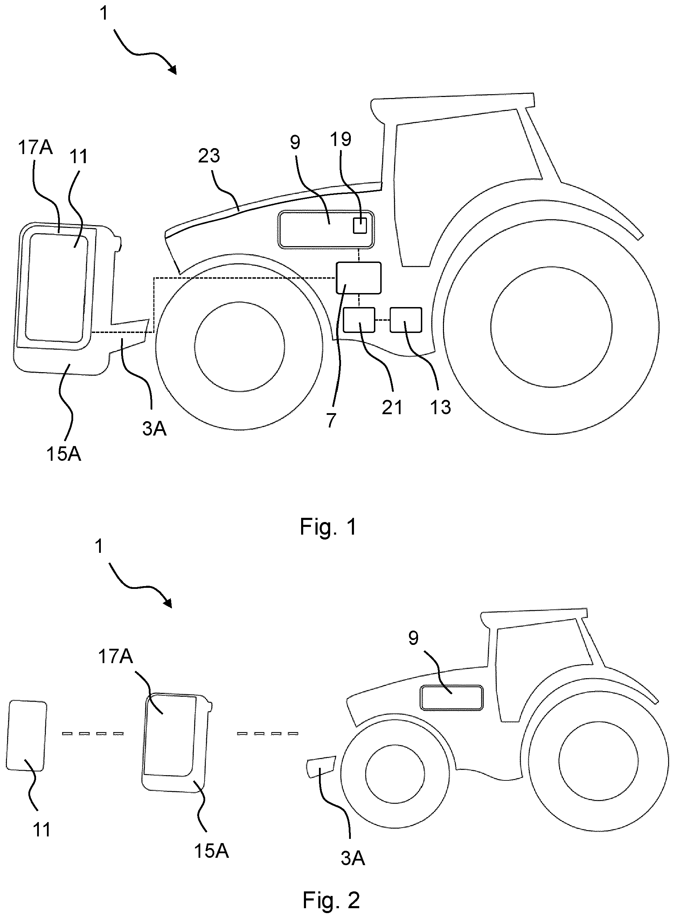

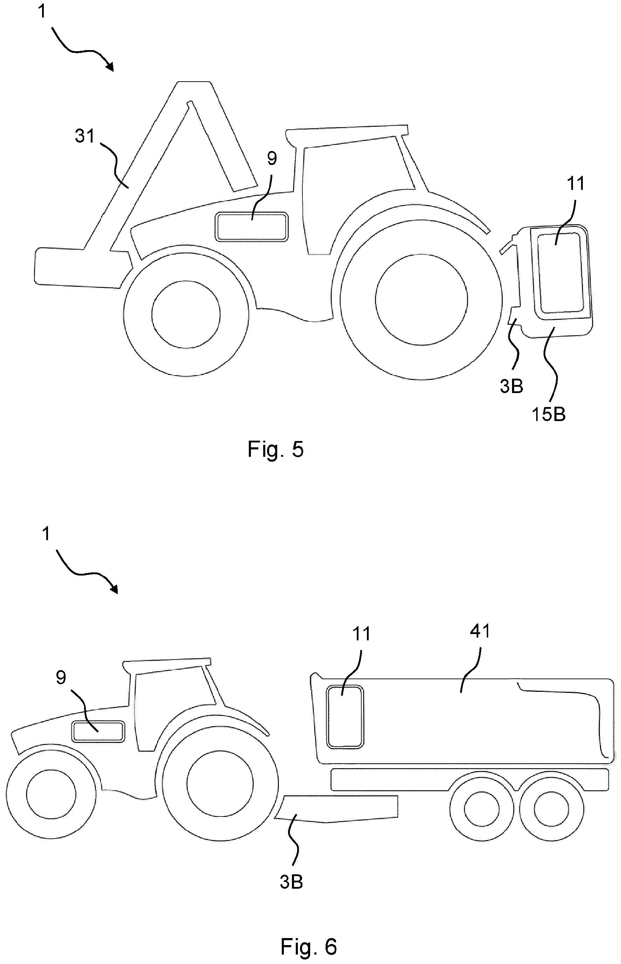

Figures 1 to 6 show an utility vehicle 1, in these examples embodied as a tractor 1, that is allowed to operate for a relative long period at a relative high power output, while the tractor 1 is free from an internal combustion engine. To this end, the tractor 1 is provided with an electromotor 7. The electromotor 7 is arranged for moving the tractor 1. Furthermore, when an agricultural implement is coupled to the tractor 1, like for example the tipper trailer 41 as shown in figure 6, the agricultural implement is also powered by the electromotor 7.

The tractor 1 comprises a coupling arrangement 3A, 3B. Via the coupling arrangement 3A and 3B, an agricultural implement can be removably coupled to the tractor 1 on a front side and a back side of the tractor 1 respectively.

For powering the electromotor 7, the tractor is provided with a first electrical power unit 9, embodied as a first battery 9. The first battery 9 is provided inside the tractor 1, under the bonnet 23 of the tractor 1, and is coupled to the electromotor 7 for moving the tractor 1 and/or powering the agricultural implement. The first battery 9 is provided with a connector unit 19 for connecting the tractor 1 to an external power source for charging the first battery 9.

For additional power, a second electrical power unit 11, embodied as a second battery 11, is removably coupled to the coupling arrangement 3A, 3B. The second battery 11 is coupled to the electromotor 7 for powering the electromotor 7 together with the first battery 9. The second battery 11 is being charged only when the second battery 11 is decoupled from the coupling arrangement 3A, 3B. The electrical capacity of the second battery 11 is larger than the electrical capacity of the first battery 9, which results in a significant increase of the total battery capacity for powering the electromotor 7.

The tractor 1 is arranged to operate in three operational modus. In a first operational mode, the first battery 9 solely powers the electromotor 7 to a first power level. In a second operational mode, the first battery 9 and the second battery 11 power the electromotor 7 to a second power level, higher than the first power level. In a third operational mode, the second battery 11 solely powers the electromotor 7 to a third power level, higher than the first power level and lower than the second power level.

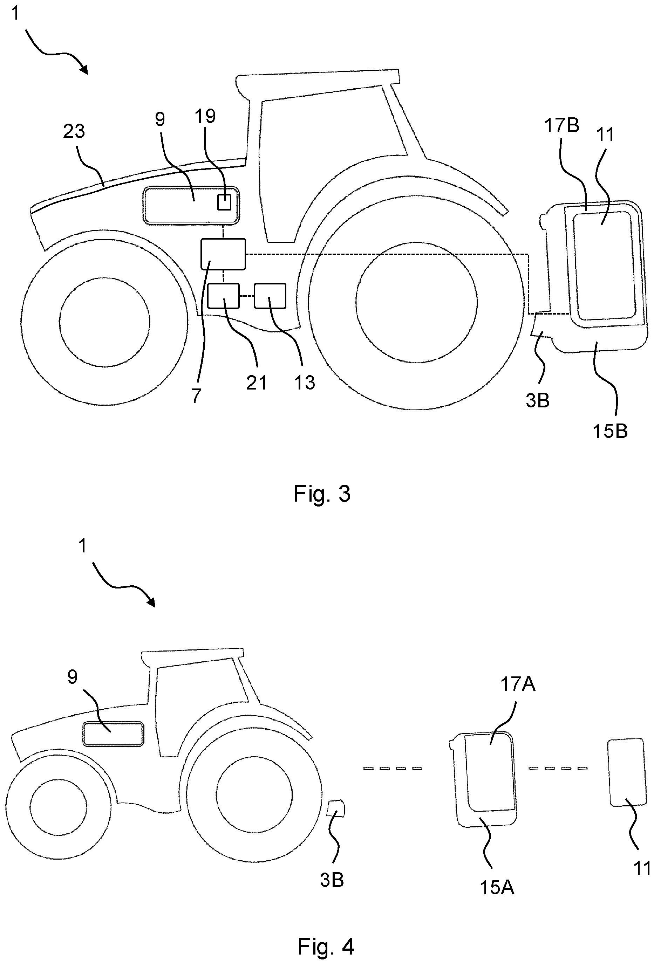

Figures 1 and 2 show an embodiment of a tractor 1 according to the present disclosure, wherein the second battery 11 is provided at a front side of the tractor 1. In this way, the second battery 11 also serves as counterweight. The tractor 1 comprises a storage arrangement 15A formed as a bumper, removably coupled to the coupling arrangement 3A. The bumper 15A is provided with a receiving space 17A, in which the second battery 11 is housed. The figures 3 to 5 show another embodiment of a tractor 1 according to the present disclosure, wherein the second battery 11 is provided at a back side of the tractor 1. The tractor 1 comprises a storage arrangement 15B formed as a bumper, removably coupled to the coupling arrangement 3B. The bumper 15B is provided with a receiving space 17B, in which the second battery 11 is housed. As shown in figure 5, the tractor 1 may be provided with an additional tool 31, also powered by the electromotor 7. Yet another embodiment of the tractor 1 according to the present disclosure is shown in figure 6, wherein the second battery 11 is provided in an agricultural implement 41, coupled to the tractor via the coupling arrangement 3B. The agricultural implement 41 is provided with wheels, which allows the second battery 11 to be supported on a ground surface.

Figures 1 and 3 show schematically and in more detail elements, provided in inside the bodywork of the tractor 1. For clarity, these elements are not shown in the remaining figures. A gear box 13 is coupled to the electromotor 7 for moving the tractor 1 via the gear box 13. The tractor 1 further comprises a control unit 21 arranged for controlling the tractor 1 to operate in one of the three operational modes.

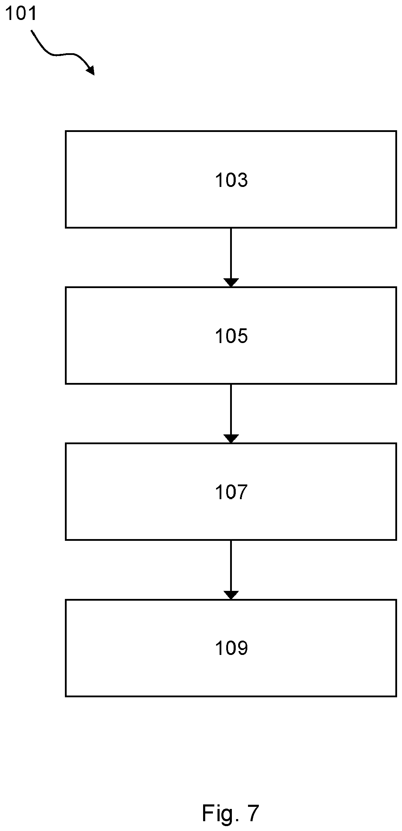

Figure 7 shows a method 101 of using the tractor 1 according to the present disclosure. In a first step of decoupling 103, the second battery 11 is decoupled from the coupling arrangement 3A, 3B and is placed, while in the receiving space 17A, 17B of the bumper 15A, 15B, on a dedicated location. At the dedicated location, the second battery 11 can safely be charged in a subsequent step of charging 105, by a charging station. After the charging 105, the charged second battery 11 is coupled to the coupling arrangement 3A, 3B during a step of coupling 107. In a final step of moving 109, the tractor 1 is moved by powering the electromotor 7, via the first battery 9 and/or the second battery 11.

## Claims

1. A utility vehicle (1), such as a tractor, comprising:
- a coupling arrangement (3A, 3B) arranged for removably coupling a tool, such as an agricultural implement, to said utility vehicle (1);
- an electromotor (7) arranged for moving said utility vehicle (1) and/or powering said tool;
- a first electrical power unit (9), coupled to said electromotor (7), arranged for powering said electromotor (7);
- a second electrical power unit (11), removably coupled to said coupling arrangement (3A, 3B), arranged for powering said electromotor (7).

2. The utility vehicle (1) according to claim 1, wherein said utility vehicle (1) is free from an internal combustion engine.

3. The utility vehicle (1) according to claim 1 or 2, wherein said utility vehicle (1) comprises a gear box (13) and wherein said electromotor (7) is coupled to said gear box (13) for moving said utility vehicle (1) via said gear box (13).

4. The utility vehicle (1) according to any one of the preceding claims, wherein said utility vehicle (1) comprises a storage arrangement (15A, 15B) that is provided with a receiving space (17A, 17B) for at least partly housing said second electrical power unit (11), wherein said second electrical power unit (11) is provided in said receiving space (17A, 17B), preferably, wherein said storage arrangement (15A, 15B) is removably coupled to said coupling arrangement (3A, 3B).

5. The utility vehicle (1) according to any one of the preceding claims, wherein an electrical capacity of said second electrical power unit (11) is larger than an electrical capacity of said first electrical power unit (9).

6. The utility vehicle (1) according to any one of the preceding claims, wherein said utility vehicle (1) comprises a connector unit (19) arranged for connecting said utility vehicle (1) to an external power source for charging said first electrical power unit (9).

7. The utility vehicle (1) according to any one of the preceding claims, wherein said utility vehicle (1) comprises a control unit (21) arranged for controlling an operational mode of said utility vehicle (1), wherein in a first operational mode of said utility vehicle (1) said electromotor (7) is powered solely by said first electrical power unit (9) and, preferably wherein in a second operational mode of said utility vehicle (1) said electromotor (7) is powered by said first electrical power unit (9) and said second electrical power unit (11).

8. The utility vehicle (1) according to claim 7, wherein, in said first operational mode, said first electrical power unit (9) solely powers said electromotor (7) to a first power level and wherein, in said second operational mode, said first electrical power unit (9) and said second electrical power unit (11) power said electromotor (7) to a second power level that is higher than said first power level.

9. The utility vehicle (1) according to claim 7 or 8, wherein said control unit (21) is further arranged for bringing said utility vehicle (1) in a third operational mode, wherein said second electrical power unit (11) solely powers said electromotor (7) to a third power level that is higher than said first power level and lower than said second power level.

10. The utility vehicle (1) according to any one of the preceding claims, wherein said first electrical power unit (9) is provided inside said utility vehicle (1).

11. The utility vehicle (1) according to any one of the preceding claims, wherein said utility vehicle (1) comprises a bonnet (23), wherein said first electrical power unit (9) is provided under said bonnet (23).

12. The utility vehicle (1) according to any one of the preceding claims, wherein said second electrical power unit (11) is arranged as counterweight.

13. The utility vehicle (1) according to any one of the preceding claims, wherein said first electrical power unit (9) and/or said second power unit (11) are batteries, preferably wherein said second electrical power unit (11) is provided with wheels for supporting said second electrical power unit (11) on a ground surface.

14. The utility vehicle (1) according to claim 12 or 13, wherein said second electrical power unit (11) is arranged for being charged only when said second electrical power unit (11) is decoupled from said coupling arrangement (3A, 3B).

15. A method (101) of using the utility vehicle (1) according to any one of the preceding claims, said method (101) comprising the steps of:
- decoupling (103), by said coupling arrangement (3A, 3B), said second electrical power unit (11) from said coupling arrangement (3A, 3B);
- charging (105), by a charging station, after said decoupling (103), said second electrical power unit (11);
- coupling (107), by said coupling arrangement (3A, 3B), said charged second electrical power unit (11) to said coupling arrangement (3A, 3B);
- moving (109) said utility vehicle (1), by powering said electromotor (7), via said first electrical power unit (9) and/or said second electrical power unit (11).
